# EUROPEAN PATENT APPLICATION

(11) **EP 1 225 516 A1**
(43) Date of publication of application: **24.07.2002**
(21) Application number: 01101379.4
(22) Date of filing: 22.01.2001
(51) Int. Cl.: G06F 17/30

(54) **Storing data of an XML-document in a relational database**

(71) Applicant: SUN MICROSYSTEMS, INC., Palo Alto, California 94303 (US)
(72) Inventor: Jahnke, Jörg, 22453 Hamburg (DE); Cordes, Dietmar, 21640 Horneburg (DE)
(74) Representative: Betten & Resch

(57) **Abstract**

XML documents are used to put structured data into a file. In some cases, e.g. when XML files are used for data exchange between database servers or when queries are to be made on XML documents, XML files have to be imported into a database. A method for importing data from an XML document containing a plurality of elements and attributes into a relational database comprises the steps of: creating an element table (210) for storing data of the plurality of elements, creating an attribute table (220) for storing data of the plurality of attributes, storing, in the element table (210), an element data set containing an element ID for every one of the plurality of elements, storing, in the attribute table (220), an attribute data set for every one of the plurality of attributes, the attribute data set containing an attribute name and attribute value and the element ID of the element to which the attribute is assigned. The method provides a fixed database model for different XML documents and allows a simple creation of a database, simple data import and export into/from the database.

## Description

### FIELD OF THE INVENTION

The present invention relates to a method and an apparatus for storing data of an XML-document in a relational database and to the resultant data structure.

### DESCRIPTION OF THE RELATED ART

Within a short time after its standardization the extended markup language XML has become increasingly popular among software developers in particular for world-wide-web applications. XML is on the way to become a worldwide standard for the creation of a structured web based document.

XML can be regarded as a meta language for describing markup languages and provides facilities to define tags and structural relationships between them. XML is a platform independent set of rules for putting structured data into a file. With XML it is fairly easy to separate the content data from the presentation or formatting information.

XML-documents are increasingly used for the exchange of data between different database servers, for example in electronic commerce applications. In this case, when XML files are used for data exchange between two database servers or when queries are to be made on a large XML-documents these XML files have to be imported into a database. While some database management systems are so to say "XML enabled" there is currently no solution available to store XML-documents in any relational database system.

Databases and XML offer complementary functionality for storing data. Databases store data for efficient retrieval, whereas XML offers an easy information exchange that enables interoperability between applications.

For converting the data of an XML-document into a database a database model has been proposed which is based on a structure of the XML files as given in the document type description (DTD). This database model uses one database table for each element of the XML-document. The database model therefore depends on the specific XML-document, for example the number of elements. This approach has a number of drawbacks. The database creation is complex and time consuming since the DTD must be parsed in order to create the database model. The data import from the XML-document is also quite slow since for each XML element a database table has to be created.

There is therefore a need for a simple, fast and efficient method for transferring data from an XML-document into a relational database.

### SUMMARY OF THE INVENTION

The present invention provides a method of storing, in the form of a relational database, data from a markup document containing a plurality of elements and attributes, the method comprising steps of creating an element table for storing data of the plurality of elements, creating an attribute table for storing data of the plurality of attributes, storing, in the element table, an element data set containing an element ID for every one of the plurality of elements, and storing, in the attribute table, an attribute data set for every one of the plurality of attributes, the attribute data set containing an attribute value and the element ID of the element to which the attribute is assigned.

The present invention uses a fixed database model for storing a data from the XML-document in the database. In this model one database table is created for storing the XML elements of the XML-document and a further table is created for storing the attributes including the attribute values of the XML-document. Formatting information and the like is not stored in database; only the content information is extracted from the XML-document. The database creation is therefore greatly simplified since one database model once created can be used for all XML-documents. Also the data import is simplified since a standard XML parser can be used to extract the elements and attributes. The retrieval of data from the database for creating a new XML-document is also simple since all necessary content information can be easily extracted from the two tables.

Preferably an element data set contains the character data contained in this XML element. It is, however, also possible to create an extra table for storing the character data.

In order to reflect the hierarchical structure of the elements of the XML-document, an element data set preferably contains the ID of a parent element of the XML element, if such parent element exists.

In order to facilitate sorting operations or the like it is possible to assign an additional number to an element and to store this number in the respective element data set.

The element data set may contain, besides the assigned element ID the element name from the XML-document.

According to a particular embodiment of the invention an additional element name table is created containing data sets for all elements of the XML-document having different names. To each name an element name ID is assigned and the element name data set contains the element name ID and the corresponding element name. The element data set then has to contain only the element name ID instead of the complete element name. If an XML-document contains a large number of elements having the same name this embodiment can achieve a substantial reduction of the necessary memory space for the database.

In a similar way according to further embodiment, an additional table is created containing every attribute name appearing in the XML-document and a corresponding attribute name ID. It is then sufficient if the attribute table contains only the attribute name ID instead of the full attribute name.

The present invention further provides a data structure comprising an element table for storing a plurality of data sets corresponding to a plurality of elements of a markup document, an element data set containing an assigned element ID and element data, an attribute table for storing a plurality of attribute data sets corresponding to a plurality of attributes of a markup document, an attribute data set containing attribute data and the element ID of the element to which the attribute is assigned.

The present invention still further provides a computer system comprising an input unit for inputting a markup document containing a plurality of elements and attributes, a processing unit for creating an element table for storing data of the plurality of elements and an attribute table for storing data of the plurality of attributes, and a storage unit for storing, for every element, an element data set containing an assigned element ID and element data in the element table and for storing, for every attribute, an attribute data set containing attribute data and the element ID of the element to which the attribute is assigned, in the attribute table.

A still further implementation of the present invention provides a computer program comprising program code for transferring data from a markup document into a relational database by carrying out the steps of creating an element table for storing data of the plurality of elements, creating an attribute table for storing data of the plurality of attributes, storing, in the element table, an element data set containing an element ID for every one of the plurality of elements, storing, in the attribute table, an attribute data set for every one of the plurality of attributes, the attribute data set containing attribute data and the element ID of the element to which the attribute is assigned.

A program code may be embodied in any form of a computer program product. A computer program product comprises a medium which stores or transports computer readable code, or in which computer readable code may be embedded. Some examples of computer program products are CD-ROM or DVD-ROM disks, ROM cards, magnetic storage media like floppy disks, magnetic tapes or computer hard drives, servers on a network and signals transmitted over a network representing a computer readable program code.

With the present invention the content information of an XML-document can fast and efficiently transferred into a relational database where search and query operations can be performed much better than on the basis of the XML-document itself.

The above-mentioned and other features, utilities and advantages of the invention will become more readily apparent from the following detailed description of particular embodiments of the invention as illustrated in the accompanying drawings.

### BRIEF DESCRIPTION OF THE DRAWINGS

Figure 1 is a schematic diagram illustrating the operation of converting an XML-document into a relational database according to an embodiment of the present invention.
Figure 2 is a schematic illustration of a database model of a further embodiment of the present invention.
Figure 3 is a flowchart illustrating an embodiment of the method according to the present invention.
Figure 4 is a flowchart illustrating a method according to a further embodiment of the present invention.
Figure 5 is a schematic illustration of a computer system of the present invention.

### DETAILED DESCRIPTION OF PARTICULAR EMBODIMENTS

According to the present invention database tables are created for the following content types of XML elements as given in the XML specification parts of which are reproduced in the following.

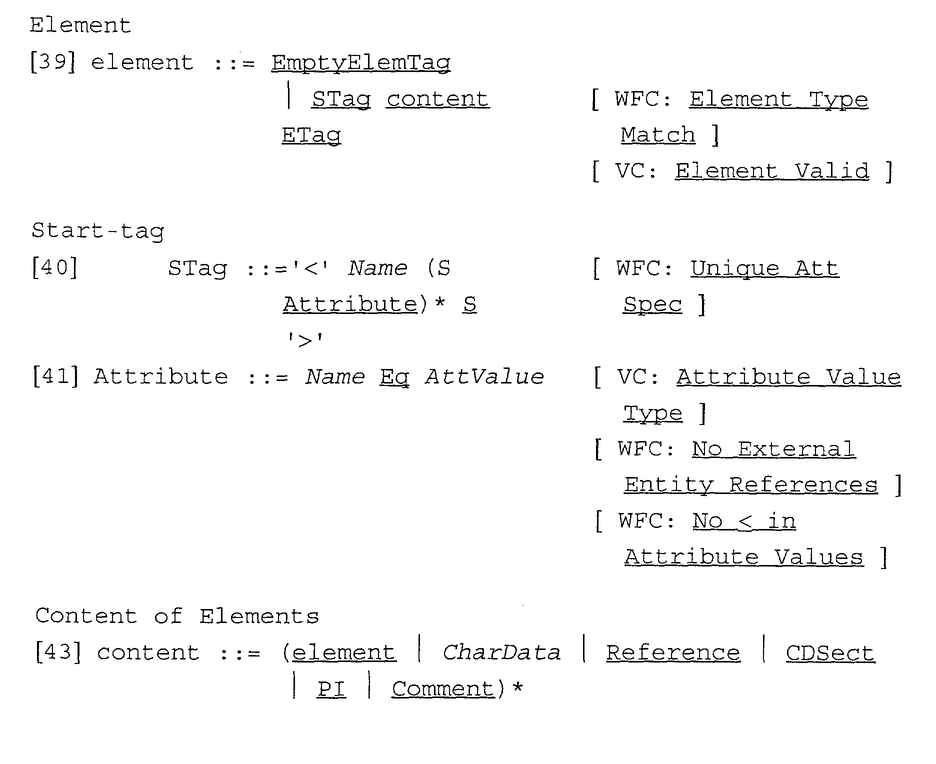

The XML elements including character data and the attributes including the corresponding attribute values form the most important part of the content of the XML-document. According to the present invention only this content is stored in the database whereas formatting information or the like is discarded.

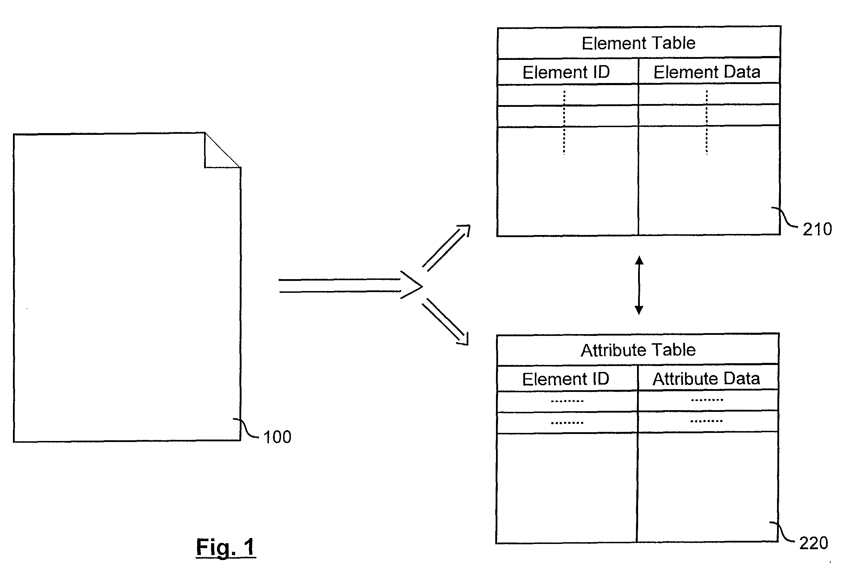

Figure 1 shows schematically the operation of transforming an XML-document 100 into a relational database. The database comprises two tables, namely an element table 210 and an attribute table 220. For every element of the XML-document an element ID and a corresponding data set in the element table is created. Besides the element ID the element data set contains element data as for example character data in the same line of the table. The second table is the attribute table 220. For every attribute contained in the XML-document 100 a data set corresponding to one line of the attribute table 220 is created. The data set contains the element ID of the element in which the attribute appears and attribute data like the attribute name and attribute value.

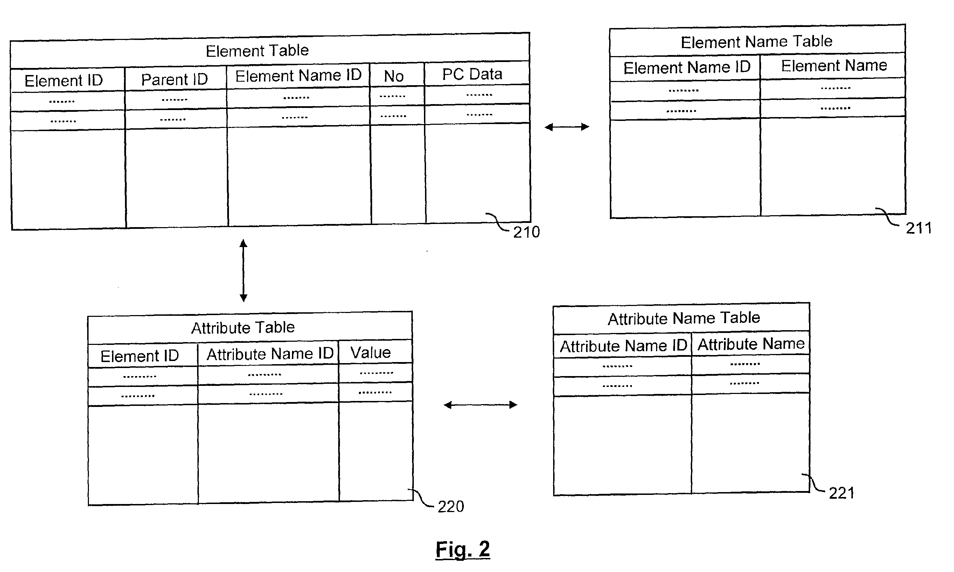

According to a further embodiment of the present invention additional tables are provided, namely an element name table 211 and an attribute name table 221 as illustrated in Figure 2. The element table 210 contains the element ID and, if the element has a parent element, the element ID of this parent element (parent ID), an element name ID, an element number for facilitating sorting operations and character data appearing in the element (PCDATA). A further element name table 211 is provided containing data sets for every element name appearing in the element table 210. Each data set contains the element name ID and the corresponding element name. The element name table 211 therefore forms a lookup table for the element name on the basis of the element name ID. This is advantageous and saves memory space if an XML-document contains a large number of elements having the same (and probably a long) name.

A similar lookup table is provided for the attribute names, namely attribute name table 221. For every attribute name appearing in the XML-document a data set in the attribute name table is produced containing the corresponding attribute name ID. The attribute table 220 then contains, for every attribute of the XML-document, the element ID of the element in which the attribute is located, the attribute name ID and the attribute value.

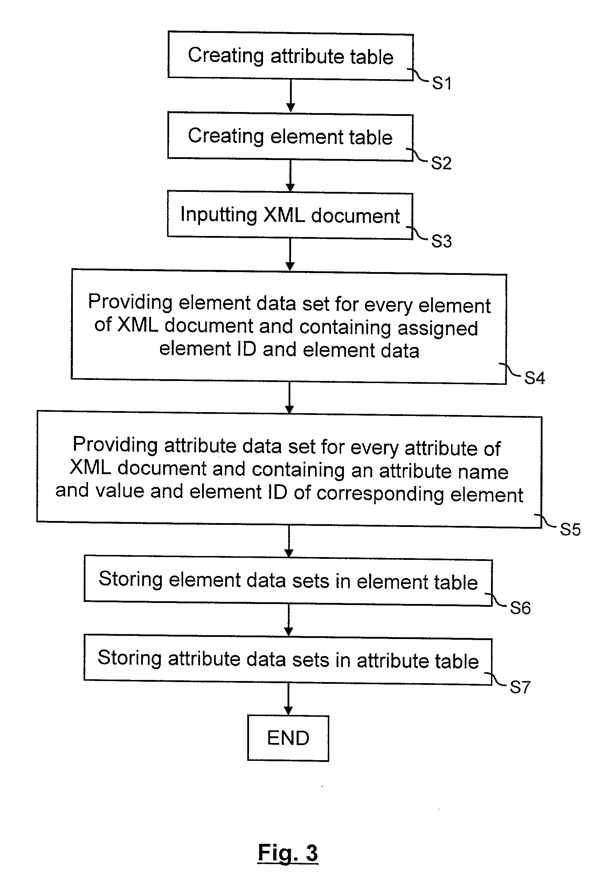

The method of storing data form a markup document, in particular an XML-document in the form of a relational database is now explained with reference to the flowchart of Figure 3.

First, the element table and the attribute table are created in method steps S1 and S2, respectively. In step S3 the XML-document is inputted. Subsequently, in method step S4, an element data set is provided for every element of the XML-document containing an assigned element ID and element data. In the following step S5 an attribute data set is provided for every attribute of the XML-document containing attribute data and the element ID of the element in which the attribute is located. Then the element data sets and the attribute data sets are stored in the element table and the attribute table, respectively. The data transfer from the XML-document into a relational database is then finished.

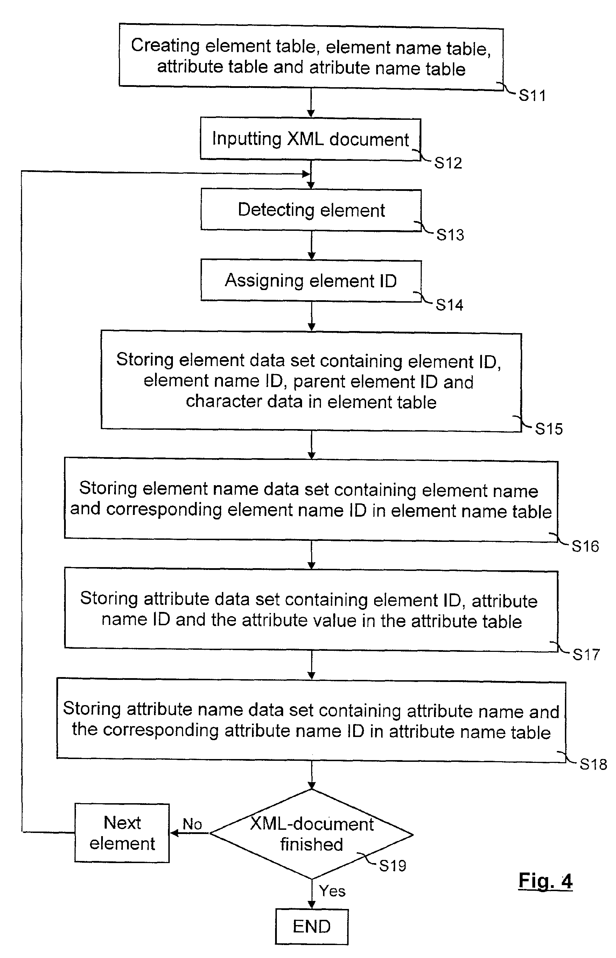

The method of storing data from an XML-document in a database as illustrated in Figure 2 is now explained with reference to the flowchart of Figure 4. An element table, element name table, attribute table and attribute name table are created in step S11. Then, after inputting the XML-document in step S12 an element of the XML-document is detected in step S13 and an element ID is assigned in step S14. An element data set containing element ID, element name ID, parent element ID and character data is then stored in the element table (step S15). Then the element name data set containing element name and corresponding element name ID is created if the element name stored in step S15 has appeared for the first time in this document.

If the element contains attributes an attribute data set containing the element ID, an attribute name ID and the attribute value are stored in the attribute table in method step S17. Subsequently, if the attribute name appears for the first time in the XML-document an attribute name data set containing attribute name and the corresponding attribute name ID is stored in the attribute name table (step S18). In step S19 it is checked whether or not the XML-document is finished. If not, the method proceeds to step S20 and proceeds with the next element. If the document is finished the data import to the database is completed.

In the following the conversion of data from a markup document into a database is explained using an illustrative example.

The XML file (without XML header) is as follows:

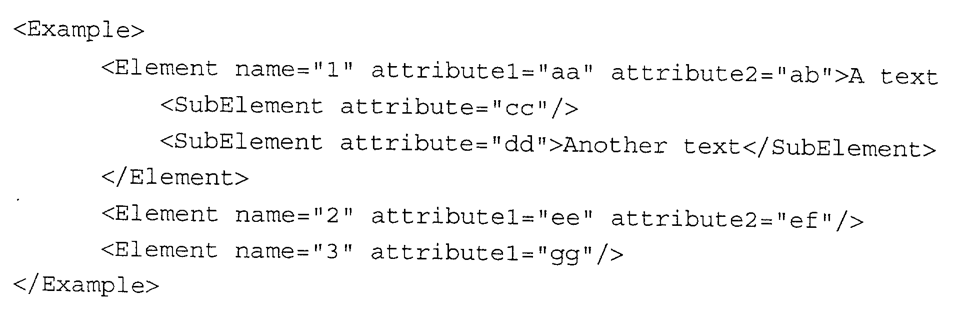

This XML file containing in total six elements, six attributes and two text portions is converted into the following two database tables:

### (1) element table

| Id | ParentId | XMLElementName | PCDATA |
|---|---|---|---|
| 1 | | "Example" | |
| 2 | 1 | "Element" | "A text" |
| 3 | 2 | "SubElement" | |
| 4 | 2 | "SubElement" | "Another text" |
| 5 | 1 | "Element" | |
| 6 | 1 | "Element" | |

### (2) attribute table

| XMLElementId | XMLAttributeName | Value |
|---|---|---|
| 2 | "attribute1" | "aa" |
| 2 | "attribute2" | "ab" |
| 3 | "attribute" | "cc" |
| 4 | "attribute" | "dd" |
| 5 | "attribute1" | "ee" |
| 5 | "attribute2" | "ef" |
| 6 | "attribute1" | "gg" |

If the additional tables, element name table and attribute name table are also used for database resulting from the above XML file looks as follows:

### (1) element name table

| Id | Name |
|---|---|
| 1 | "Example" |
| 2 | "Element" |
| 3 | "SubElement" |

### (2) element table

| Id | ParentId | XMLElementNameId | PCDATA |
|---|---|---|---|
| 1 | | 1 | |
| 2 | 1 | 2 | "A text" |
| 3 | 2 | 3 | |
| 4 | 2 | 3 | "Another text" |
| 5 | 1 | 2 | |
| 6 | 1 | 2 | |

### (3) attribute name table

| Id | Name |
|---|---|
| 1 | "attribute1" |
| 2 | "attribute2" |
| 3 | "attribute" |

### (4) attribute table

| XMLElementId | XMLAttributeNameId | Value |
|---|---|---|
| 2 | 1 | "aa" |
| 2 | 2 | "ab" |
| 3 | 3 | "cc" |
| 4 | 3 | "dd" |
| 5 | 1 | "ee" |
| 5 | 2 | "ef" |
| 6 | 1 | "gg" |

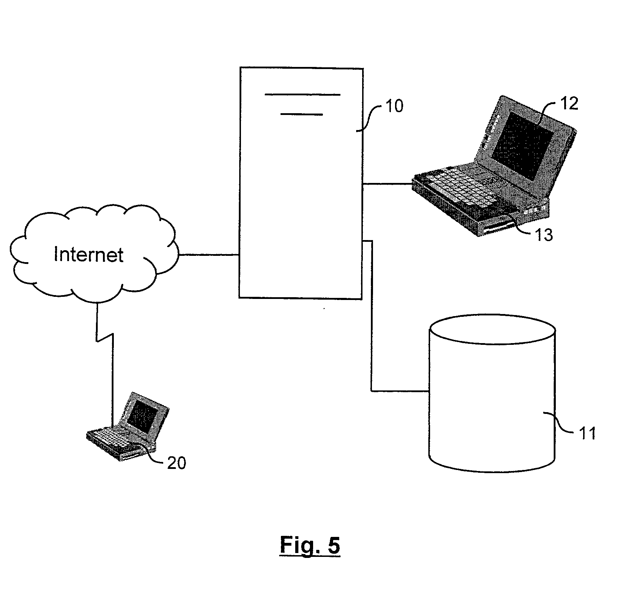

The present invention may be carried out using any suitable hardware configuration involving a personal computer, a workstation a portable device or a network of network computer devices. An example is schematically illustrated in Figure 5. The computer comprises a main unit 10 including a central processing unit, input/output means for connection with a communication network like the internet, a volatile memory etc. The computer system further comprises a storage unit 11 for storing the database, a display unit 12 and an input unit 13 like a keyboard, a mouse and/or speech processing means. The computer system may be connected over a suitable network to other devices like a mobile computer 20.

While the invention has been particularly shown with reference to an embodiment thereof, it will be understood by those skilled in the art that various other changes in the form and details may be made therein without departing from the spirit and scope of the invention.

## Claims

1. A method of storing, in the form of a relational database, data from a markup document (100) containing a plurality of elements and attributes the method comprising the steps of:
creating an element table (210) for storing data of the plurality of elements,
creating an attribute table (220) for storing data of the plurality of attributes,
storing, in the element table (210), an element data set containing an element ID for every one of the plurality of elements,
storing, in the attribute table (220), an attribute data set for every one of the plurality of attributes, the attribute data set containing attribute data and the element ID of the element to which the attribute is assigned.

2. The method of claim 1, wherein an element data set contains character data.

3. The method of claim 1 or 2 wherein an element data set contains a parent element ID.

4. The method of one of claims 1 to 3 wherein an element data set contains an element number assigned to the element.

5. The method of one of claims 1 to 4 wherein an element data set contains an element name.

6. The method of one of claims 1 to 4 comprising the step of creating a further table for storing, for every element name of the plurality of elements, a data set containing the element name and a corresponding element name ID.

7. The method of claim 1 comprising the step of creating a further table for storing, for every one of the plurality of elements, a data set containing the element ID and element character data.

8. The method of one of claims 1 to 7 wherein an attribute data set contains attribute name and attribute value.

9. The method of one of claims 1 to 7 wherein an attribute data set contains an attribute name ID, the method comprising the step of creating a further table for storing, for every attribute name, a data set containing the attribute name and a corresponding attribute name ID.

10. The method of any one of claims 1 to 9 wherein the markup document is an XML document.

11. A data structure comprising:
an element table (210) for storing a plurality of data sets corresponding to a plurality of elements of a markup document (100), an element data set containing an assigned element ID and element data,
an attribute table (220) for storing a plurality of attribute data sets corresponding to a plurality of attributes of a markup document, an attribute data set containing attribute data and the element ID of the element to which the attribute is assigned.

12. The data structure of claim 11, wherein an element data set contains character data.

13. The data structure of claim 11 or 12 wherein an element data set contains a parent element ID.

14. The data structure of one of claims 11 to 13, wherein an element data set contains an element number assigned to the element.

15. The data structure of one of claims 11 to 14, wherein an element data set contains an element name.

16. The data structure of one of claims 11 to 14 wherein an element data set comprises an element name ID, the data structure comprising a further table for storing, for each element name ID, a data set containing the element name ID and the corresponding element name.

17. The data structure of claim 11 comprising a further table for storing a data set containing the element ID and the character data of an element.

18. The data structure of one of claims 11 to 17 wherein an attribute data set contains attribute name and attribute value.

19. The data structure of one of claims 11 to 17 wherein an attribute data set contains an attribute name ID, the data structure further comprising, for every attribute name ID, a data set containing the attribute name ID and the corresponding attribute name.

20. A data set of one of claims 11 to 19, wherein the markup document is an XML document.

21. A computer program comprising program code for transferring data from a markup document into a relational database by carrying out the steps of:
creating an element table (210) for storing data of the plurality of elements,
creating an attribute table (220) for storing data of the plurality of attributes,
storing, in the element table (210), an element data set containing an element ID for every one of the plurality of elements,
storing, in the attribute table (220), an attribute data set for every one of the plurality of attributes, the attribute data set containing attribute data and the element ID of the element to which the attribute is assigned.

22. The computer program of claim 21 wherein an element data set contains a parent element ID.

23. The computer program of claim 21 or 22 wherein an element data set contains an element number assigned to the element.

24. The computer program of one of claims 21 to 23 wherein an element data set contains an element name.

25. The computer program of one of claims 21 to 23 comprising program code for creating a further table for storing, for every element name of the plurality of elements, a data set containing the element name and a corresponding element name ID.

26. The computer program of claim 21 comprising program code for creating a further table for storing, for every one of the plurality of elements, a data set containing the element ID and element character data.

27. The computer program of one of claims 21 to 26 wherein an attribute data set contains an attribute name.

28. The computer program of one of claims 21 to 26 wherein an attribute data set contains an attribute name ID, the computer program comprising program code for creating a further table for storing, for every attribute name, a data set containing the attribute name and a corresponding attribute name ID.

29. The computer program of any one of claims 21 to 28 wherein the markup document is an XML document.

30. A computer program product comprising program code for transferring data from a markup document into a relational database by carrying out the steps of:
creating an element table (210) for storing data of the plurality of elements,
creating an attribute table (220) for storing data of the plurality of attributes,
storing, in the element table (210), an element data set containing an element ID for every one of the plurality of elements,
storing, in the attribute table (220), an attribute data set for every one of the plurality of attributes, the attribute data set containing attribute data and the element ID of the element to which the attribute is assigned.

31. A computer system comprising:
an input unit (10) for inputting a markup document (100) containing a plurality of elements and attributes,
a processing unit (10) for creating an element table (210) for storing data of the plurality of elements and attribute table (220) for storing data of the plurality of attributes, and
a storage unit (11) for storing, for every element, an element data set containing an assigned element ID and element data in the element table (210) and for storing, for every attribute, an attribute data set containing attribute data and the element ID of the element to which the attribute is assigned, in the attribute table (220).
